# EUROPÄISCHE PATENTSCHRIFT

(11) **EP 1 556 628 B1**
(45) Veröffentlichungstag und Bekanntmachung des Hinweises auf die Patenterteilung: **26.07.2006**
(21) Anmeldenummer: 03757999.2
(22) Anmeldetag: 16.10.2003
(51) Int. Cl.: F16F 15/173

(54) **VISKOSITÄTS-DREHSCHWINGUNGSDÄMPFER MIT KÜHLKANÄLEN**
VISCOUS TORSIONAL VIBRATION DAMPER COMPRISING COOLING CHANNELS
AMORTISSEUR VISQUEUX DE VIBRATIONS DE TORSION COMPRENANT DES CONDUITS DE REFROIDISSEMENT

(30) Priorität: 23.10.2002 DE 10249555; 17.01.2003 DE 10301707
(43) Veröffentlichungstag der Anmeldung: 27.07.2005
(73) Patentinhaber: Hasse & Wrede GmbH, 12681 Berlin (DE)
(72) Erfinder: KIENER, Wolfgang, 10247 Berlin (DE); SANDIG, Jörg, 10318 Berlin (DE)
(74) Vertreter: Mattusch, Gundula
(86) Internationale Anmeldenummer: PCT/EP2003/011492
(87) Internationale Veröffentlichungsnummer: WO 2004/038251

(56) Entgegenhaltungen:
- EP-A- 0 557 603
- DE-A- 10 201 184
- DE-A- 19 729 489
- PATENT ABSTRACTS OF JAPAN vol. 2000, no. 09, 13. Oktober 2000 (2000-10-13) -& JP 2000 154847 A (MITSUBISHI MOTORS CORP), 6. Juni 2000 (2000-06-06)

## Beschreibung

Die Erfindung betrifft einen Viskositäts-Drehschwingungsdämpfer mit einem drehsteif mit einer Maschinenwelle, insbesondere einer Motorwelle, verbindbaren ringförmigen Gehäuse, wobei das Gehäuse eine Arbeitskammer zur Aufnahme eines Schwungrings umschließt und die Arbeitskammer mit einem viskosen Dämpfungsmittel gefüllt ist, wobei wenigstens eine der beiden Stirnflächen des Drehschwingungsdämpfers eine Lüfterscheibe mit Kühlkanälen trägt. Ein solcher Viskositäts-Drehschwingungsdämpfer ist in der DE 197 29 489 A1 offenbart.

Der Viskositäts-Drehschwingungsdämpfer, im Folgenden kurz Visco-Dämpfer genannt, wird üblicherweise an der Kraftgegenseite von Dieselmotor-Kurbelwellen angeflanscht. Er soll die Drehschwingamplituden der Kurbelwelle vermindern. Durch oszillierende Scherung des Dämpfungsmediums Siliconöl im Inneren des Dämpfers wird Schwingenergie in Wärme umgewandelt, die durch Konvektion an die umgebende Luft oder ein anderes Kühlmedium abgegeben werden muss.

Die Leistungsfähigkeit eines Visco-Dämpfers hängt unter anderem vom Wärmedurchgang zwischen dem Dämpfungsmedium, den Wänden des Dämpfergehäuses und dem umgebenden Kühlmedium ab. Ein Überschreiten der maximal zulässigen Betriebstemperatur führt zum "Abkochen" des Siliconöls, also einem unumkehrbaren Qualitätsverlust. Es gilt daher, den erwähnten Wärmedurchgang bestmöglich zu optimieren, zum Beispiel durch forcierte Konvektion an der Oberfläche des Dämpfergehäuses.

Zur Lösung dieser Aufgabe wird mit Hilfe geeigneter Einrichtungen die den Visco-Dämpfer umgebende Luft turbulent verwirbelt und so die Wärmeübertragung an der Dämpferoberfläche verbessert.

Diese Absicht verfolgte auch schon die aus der DE 42 05 764 A1 bekannte Anordnung von Lüfterflügeln auf der Stirnfläche des Visco-Dämpfers. Bei dem dort beschriebenen Visco-Dämpfer ist das Dämpfergehäuse auf beiden Planflächen mit Lüfterscheiben versehen. An diesen Lüfterscheiben wird eine Vielzahl von Lüfterflügeln U-förmig ausgeschnitten und aufgekantet. Die Flügel liegen in achsparallelen Ebenen und stehen unter konstanten Winkeln zueinander. Die aus einem gut wärmeleitenden Werkstoff bestehenden Lüfterflügel vergrößern die belüftete Oberfläche des Dämpfers und sorgen so für eine verbesserte Wärmeabfuhr im Betrieb. Darüber hinaus werden die Lüfterscheiben mittels eines wärmeleitenden Klebstoffs auf der zugeordneten Planfläche des Dämpfergehäuses befestigt.

Allerdings lässt sich der Klebeprozess derartig bestückter Visco-Dämpfer schlecht automatisieren; und beim Versand, bei der Montage am Motor und auch im Betrieb bedarf es besonderer Sorgfalt, damit die auskragenden Lüfterflügel nicht beschädigt werden. Es besteht auch immer die Gefahr, dass sich ein Monteur an den scharfkantigen Blechteilen verletzt.

Die Patentveröffentlichung GB 650 891 befasst sich ebenfalls mit der Wärmeübertragung an Visco-Dämpfern. Der hier beschriebene Dämpfer weist auskragende, strahlenförmig oder gekrümmt gerichtete Schaufeln auf, die von einer mitrotierenden Blechkappe abgedeckt sind. An dieser Lösung erscheinen der erforderliche Bauraum und die technologische Schwierigkeit, die Kappe mit geringstem Aufwand an den Schaufeln zu befestigen, als nachteilig.

Mit der Konvektionskühlung von Visco-Dämpfern befasst sich auch DE 197 29 489 A1. Hier sind es Lüfterscheiben mit radial verlaufenden, röhrenförmigen Kühlkanälen auf den beiden Planflächen des Dämpfergehäuses, welche die infolge der Rotation mitgerissene Luft führen. Die Kanäle erstrecken sich über die gesamte Breite der Lüfterscheibe. An deren Innenradius stehen sie in gewünschter Weise eng beisammen, streben aber zum Außenradius zwangsläufig auseinander, obwohl dort der dichteste Wärmestrom abzuführen wäre. Wegen der beträchtlichen Kanallänge strömt die Kühlluft in den Röhren überwiegend laminar; wärmetechnisch effizienter ist hingegen eine turbulente Strömung. Die von radial innen bis radial außen sich erstreckenden Kanäle machen die ungebundene Lüfterscheibe instabil, sie verwölbt sich und ist schwierig zu handhaben. Als nachteilig gilt auch, dass diese Lüfterscheiben mit den Dämpfer-Planflächen durch Punktschweißung verbunden werden, die sich nur mit programmgesteuerten Robotern automatisieren lässt.

Hiervon ausgehend ist es Aufgabe der Erfindung, einen gattungsgemäßen Viskositäts-Drehschwingungsdämpfer anzugeben, dessen Wärmeabfuhr sowie Herstellung, Handhabung und Formstabilität verbessert werden.

Zur erfindungsgemäßen Lösung dieser Aufgabe dienen die Merkmale des Patentanspruches 1. Vorteilhafte Ausführungsformen der Erfindung finden sich in den Gegenständen der Ansprüche 2 bis 14 wieder.

Ein wesentlicher Vorteil der Erfindung liegt in der Anordnung von Kühlkanälen auf zumindest zwei konzentrischen Kreisen der Lüfterscheibe. Die im Betrieb des Viskositäts-Drehschwingungsdämpfers in radialer Richtung vorbeiströmende Luft kommt zunächst mit den radial inneren Kühlkanälen und dann mit den radial äußeren Kühlkanälen in Berührung. In beiden "Kontaktfällen" findet ein Wärmeübergang von den Kühlkanälen zur Luft statt. Durch die Anordnung der Kühlkanäle in zwei oder mehr Reihen ergibt sich dank der radialen Beabstandung der Kühlkanäle eine zusätzliche Verwirbelung der Luft und verhindert die für einen hohen Wärmeübergang ungünstigere laminare Kühlluftströmung. Hierdurch ist gerade an hoch belasteten Dämpfern eine verbesserte Konvektion und Wärmeübertragung zu erreichen.

Eine weitere Optimierung des Wärmeübergangs ist durch den Parameter Formgebung der Kühlkanäle möglich. Durch Variation der geometrischen Abmessungen der radial äußeren Kühlkanäle gegenüber jenen der radial inneren Kühlkanäle kann die Turbulenz der Luftströmung lokal beeinflusst werden, was erneut zur verbesserten Konvektion und Wärmeübertragung führt. Es kann durchaus auch wünschenswert sein, die thermische Belastung über die radiale Erstreckung des Viskositäts-Drehschwingungsdämpfers zu variieren, um auf das Dämpfungsverhalten Einfluss zu nehmen.

Ein vorteilhafter Konstruktionsparameter ist das Verhältnis c zwischen radialer Länge I und Breite b der Kühlkanäle. Sobald das Verhältnis cₐ der radial äußeren Kühlkanäle größer ist als das Verhältnis cᵢ der radial inneren Kühlkanäle, kann das Kühlverhalten lokal angepasst und eine Turbulenzbildung bereits im radial inneren Bereich gefördert werden. Günstige Werte für c liegen zwischen 3,5 und 1.

Alternativ oder zusätzlich zu vorgenanntem Konstruktionsparameter ist die Geometrie der Kühlkanäle derart zu wählen, dass die Querschnittsfläche Qₐ der radial äußeren Kühlkanäle kleiner ist als die Querschnittsfläche Qᵢ der radial inneren Kühlkanäle. Auch hiermit kann das Kühlverhalten lokal angepasst und eine Turbulenzbildung gefördert werden.

Eine vergleichbare Wirkung ergibt sich, wenn die radial inneren Kühlkanäle breiter sind als die radial außen liegenden.

Ein fertigungstechnisch mit geringem Aufwand zu variierender Konstruktionsparameter zur Beeinflussung des lokalen Kühlverhaltens ist der Winkelabstand α. Im Allgemeinen ist der Winkelabstand αₐ zwischen benachbarten, radial außen liegenden Kühlkanälen kleiner als der Winkelabstand αᵢ zwischen den radial innen liegenden Kühlkanälen. Vorzugsweise beträgt der Winkelabstand αₐ zwischen den radial äußeren Kühlkanälen 3° bis 7°; für die radial innen liegenden Kühlkanäle beträgt αᵢ vorzugsweise 5° bis 15°.

Eine gegenüber den Radialen schräge Ausrichtung der Kühlkanäle bietet sich an, wenn unter Berücksichtigung der Wellen-Drehrichtung ein möglichst hoher Kühlluftdurchsatz erzielt werden soll. Günstig sind Schrägungswinkel β bis zu 30°.

Vorzugsweise liegen die Kühlkanäle auf verschiedenen Radialen, so dass die versetzte Anordnung der Kühlkanäle unterschiedlicher Teilkreise die mitgerissene Kühlluft innig verwirbelt; so wird der bestmögliche Wärmeübergang erzielt.

Die Kühlkanäle stellen vorzugsweise integrale Bestandteile einer leicht zu handhabenden Lüfterscheibe dar. Sie sind aus dem Werkstoff der Scheibe spanlos heraus gearbeitet. Die Lüfterscheibe ist in baulich einfacher und kostengünstiger Weise aus dünnem Blech von guter Wärmeleitfähigkeit hergestellt, wobei die Kühlkanäle an zwei ― auf die Dämpferdrehachse bezogen ― tangentialen Seiten eingeschnitten und aus der Ebene der Lüfterscheibe heraus gewölbeartig tiefgezogen werden. Die Längserstreckung eines jeden Kühlkanals ist demnach stets geringer als die Scheibenbreite. Die Aneinanderreihung der aufgewölbten Kühlkanäle über die gesamte Kreisringfläche der Lüfterscheibe erweckt den optischen Eindruck einer Wellenbewegung.

Radial außerhalb und innerhalb einer jeden Reihe von aufgewölbten Kühlkanälen verbleiben ebene Kreisringpartien der Lüfterscheibe, die ihr Formstabilität und Ebenheit verschaffen und sich für die Anordnung von zirkularen Strahlschweißnähten anbieten. Solche Schweißnähte werden in einem automatisierten Verfahren und in einer einzigen Aufspannung, also besonders wirtschaftlich erzeugt. Darüber hinaus schaffen sie eine innige, gut wärmeleitende Verbindung zwischen Lüfterscheibe und Dämpfergehäuse.

Dank der sanft gerundeten Aufwölbung jedes einzelnen Kühlkanals ist die Gefahr von Verletzungen weitgehend ausgeschlossen. Die gewölbten Flügel sind zudem so formstabil, dass mehrere mit Lüfterscheiben applizierte Dämpfer platzsparend gestapelt, gelagert und versandt werden können.

Ein fertigungstechnischer Vorteil besteht darin, dass die Lüfterscheibe entweder in einem einzigen Arbeitsgang hergestellt wird, der Stanzen, Einschneiden und Tiefziehen umfasst; bei kleineren Stückzahlen lässt sich hingegen zunächst die ebene Blechronde ausstanzen, in die dann begrenzte Segmente von Kühlkanälen durch iteratives Weiterschalten eingebracht werden. Denkbar sind ebenfalls wirtschaftliche Zwischenstufen dieser beiden Verfahren.

Die Erfindung wird nachfolgend an Hand eines Ausführungsbeispiels unter Bezugnahme auf die beigefügte Zeichnung erläutert. Es zeigen:
- Fig. 1: eine halbierte Schnittansicht des erfindungsgemäßen Drehschwingungsdämpfers;
- Fig. 2: eine Ansicht der Lüfterscheibe nach Fig. 3 in axonometrischer Darstellung;
- Fig. 3: eine Ansicht auf eine Lüfterscheibe mit zwei Reihen von Kühlkanälen;
- Fig. 4: eine Ansicht entsprechend Pfeilrichtung "A" in Fig. 3;
- Fig. 5: einen Querschnitt durch einen einzelnen Kühlkanal;
- Fig. 6: eine Teilansicht auf eine Lüfterscheibe nach Fig. 3 mit winkelversetzten Kanalreihen und
- Fig. 7: eine Teilansicht auf eine Lüfterscheibe mit schrägen äußeren Kühlkanälen.

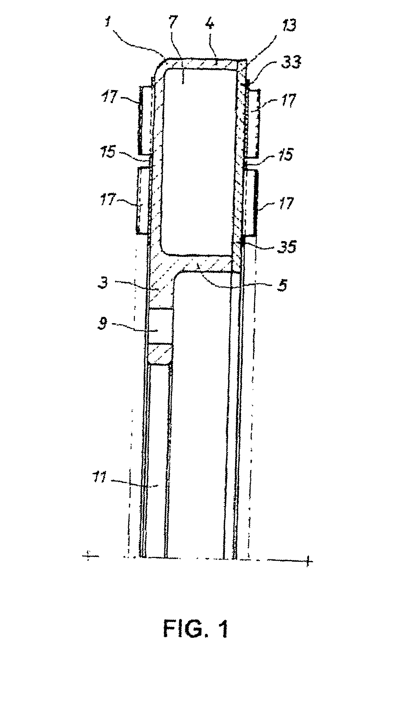

In Fig.1 der Zeichnung ist in halbierter Schnittansicht ein erfindungsgemäßer Viskositäts-Drehschwingungsdämpfer dargestellt, der ein Dämpfergehäuse 1 mit dem radial innen liegenden Befestigungsflansch 3 aufweist. Das Dämpfergehäuse 1 ist aus Stahlblech oder einem anderen geeigneten Werkstoff gefertigt und umschließt mit seinem Außenmantel 4 und dem Innenmantel 5 die ringförmige Arbeitskammer 7, in der sich eine gleitgelagerte Sekundärmasse (Schwungring nicht dargestellt) und das viskose Dämpfungsmedium befinden.

Der Befestigungsflansch 3 weist auf einem gemeinsamen Durchmesser verteilt angeordnete Befestigungsbohrungen 9 zur Aufnahme von Schrauben auf, mit denen der Visco-Dämpfer an einem rotierenden Maschinenteil, z.B. einer zu bedämpfenden Kurbelwelle, angeschraubt oder sonst wie in Verbindung gebracht wird. Die Mittenöffnung 11 nimmt den Zentrieransatz oder dergleichen des zu bedämpfenden Maschinenteils auf. Grundsätzlich sind auch andere kraft- oder formschlüssige Verbindungen des Dämpfergehäuses mit der zu bedämpfenden Welle denkbar.

Die in der Schnittansicht nach Fig.1 rechte Seite der Arbeitskammer 7 des Visco-Dämpfers ist durch den Deckel 13 verschlossen. Der Deckel 13 ist aus einer gestanzten oder in sonstiger Weise geformten Blechronde hergestellt. An wenigstens einer der Planseiten des Dämpfergehäuses ist, im dargestellten Ausführungsbeispiel an seinen beiden Seiten, eine Lüfterscheibe 15 befestigt. Die Lüfterscheiben 15 sind aus Ronden dünnen Blechs hergestellt und jeweils mit einer Vielzahl von Kühlkanälen 17,18 versehen, die mit ihrer Kanallängsachse auf Radialen des Dämpfergehäuses 1 liegen.

Die Kühlkanäle 17,18 liegen im Hinblick auf den Visco-Dämpfer auf zwei verschiedenen konzentrischen Teilkreisen. Die radiale Ausdehnung der Lüfterscheiben 15 bzw. der Kühlkanäle 17,18 ist derart gewählt, dass die Kühlkanäle 17,18 im Flankenbereich des Schwungrings (nicht dargestellt) liegen und von der Arbeitskammer durch die Wandung des Dämpfergehäuses 1 bzw. des Deckels 13 getrennt sind. Hierdurch wird eine Wärmeübertragung vom Dämpfungsmittel auf die Kühlkanäle 17,18 auf kürzestem Weg ermöglicht.

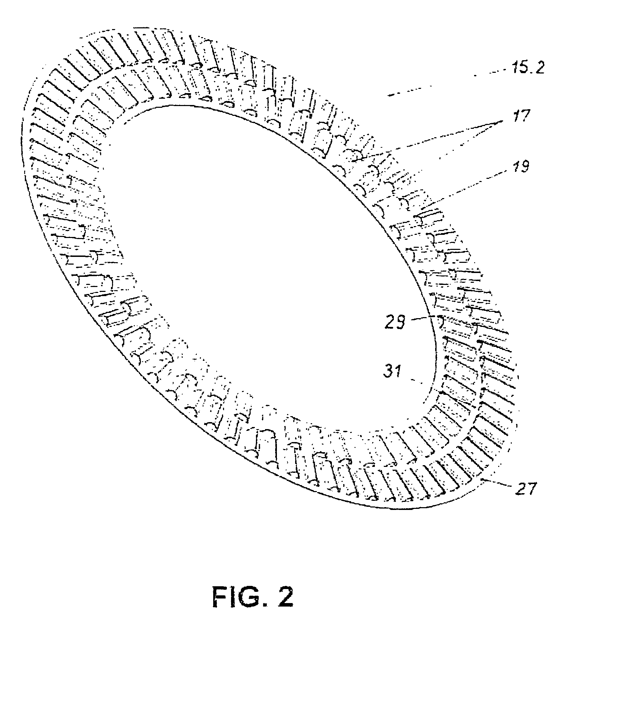

Die charakteristische Wellenstruktur der Lüfterscheibe 15 wird in Fig. 2 dank der axonometrischen Darstellung deutlich.

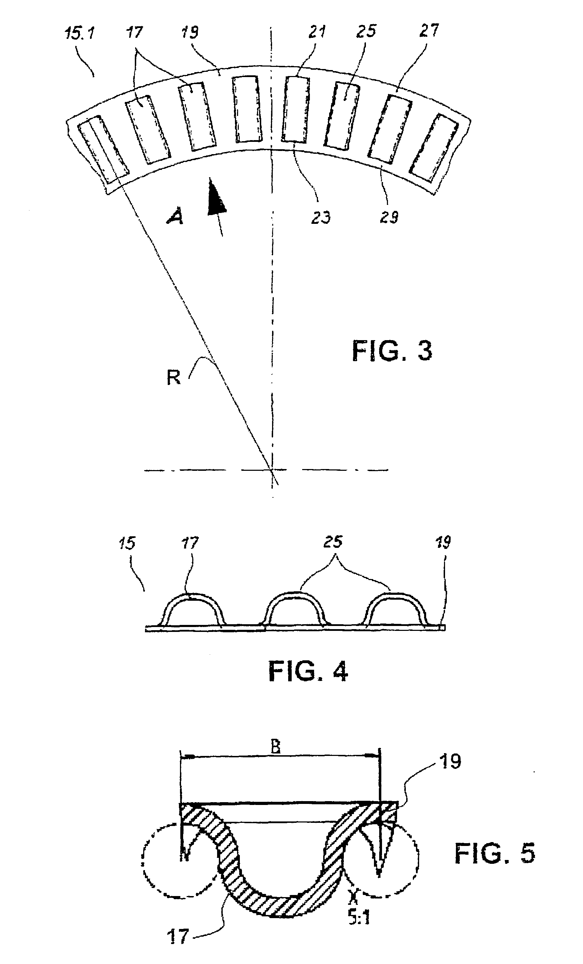

Bei der in Fig. 3 wiedergegebenen Teildraufsicht der erfindungsgemäßen Lüfterscheibe 15 sind zwei konzentrische Reihen von regelmäßig verteilten Kühlkanälen 17,18 dargestellt. Die inneren Kanäle 17 und die äußeren Kanäle 18 sind um einige Winkelgrade gegeneinander versetzt, so dass die von radial innen nach radial außen geförderte Kühlluft bestmöglich verwirbelt und ein Maximum an Kühlwirkung erreicht wird. Die Kühlkanäle 17,18 sind radial gerichtet, die Lüfterscheibe eignet sich somit für beide Drehrichtungen gleichermaßen. In besonderen Einsatzfällen kann es zweckmäßig sein, den Kühlkanälen 17,18 im Hinblick auf eine Vorzugs-Drehrichtung eine optimierte Ausformung zu verleihen. An Stelle der regelmäßigen Teilung sind auch andere Anordnungen der Kühlkanäle denkbar, etwa in segmentierten Gruppen, die um einige Winkelgrade voneinander beabstandet sind.

Die Kühlkanäle sind aus dem Material der Blechronde 19 heraus gearbeitet. Hierbei wird die ausgestanzte Ronde an den mit 21, 23 gekennzeichneten Stellen eingeschnitten. Im anschließenden Tiefziehprozess werden die Kühlkanäle 17,18 einzeln oder gruppenweise tiefgezogen und aufgewölbt. Beim Vorhandensein des erforderlichen Schnitt- und Stanzwerkzeugs lassen sich die Arbeitsgänge Stanzen, Einschneiden und Tiefziehen besonders wirtschaftlich zusammenfassen.

Da sich die Kühlkanäle in ihrer Längsausdehnung nur über einen Teil der Lüfterscheibenbreite erstrecken, bleiben radial außerhalb und innerhalb der Kanäle die unverformten, ebenen Kreisringe 27, 29 erhalten, die sich als Bahnen für die zirkularen Strahlschweißnähte 33, 35 anbieten. Derartige Schweißnähte sind in der Schnittansicht von Fig. 1 angedeutet.

Zum äußeren und inneren Kreisring 27, 29 gesellt sich der mittlere Kreisring 31 zwischen den beiden Kanalreihen. Bei Bedarf kann auch hier eine Strahlschweißnaht als zusätzliche Anbindung der Lüfterscheibe eingebracht werden.

In der Teilansicht von Fig. 4 ist zu erkennen, wie die durchgezogenen Kühlkanäle 17 die ebene Blechronde 19 überragen. Der Blick des Betrachters (Pfeil "A" in Fig.3) folgt hier dem Kühlluftstrom, der durch die kanalartigen Aufwölbungen 25 von radial innen nach radial außen gelenkt wird. Zwischen den aufgewölbten Kühlkanälen 17 liegt die Blechronde 19 am Dämpfergehäuse 1 bzw. am Deckel 13 an und sorgt so für einen optimalen Wärmeübergang.

Die Breite b der Kühlkanäle wird, wie in Fig. 5 gezeigt, durch die Ziehradien r bestimmt, die die Kühlkanäle 17,18 im Übergang zur Blechronde 19 aufweisen. Die Querschnittsfläche Qᵢ , Qₐ der Kühlkanäle ist, von fertigungstechnisch bedingten Abweichungen abgesehen, konstant.

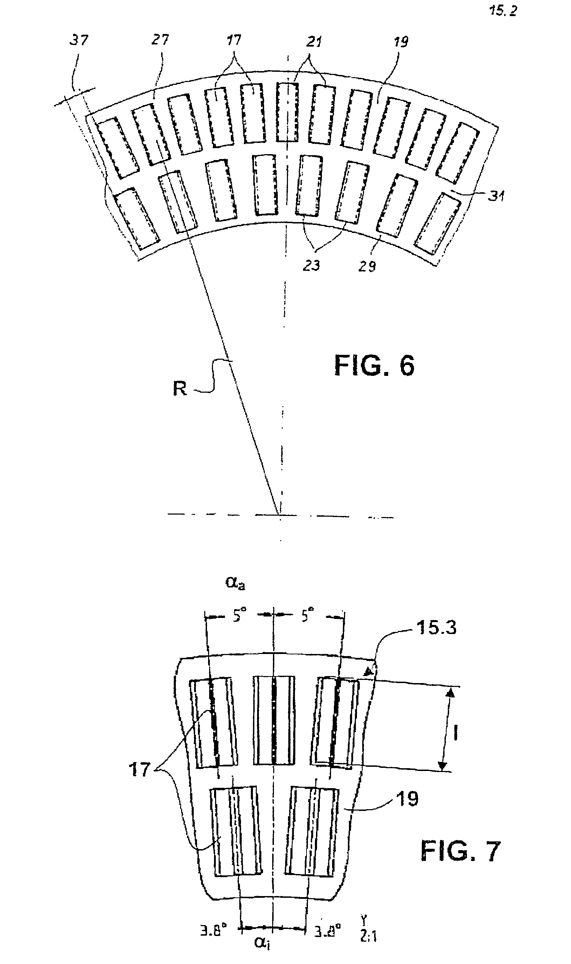

Die in Fig. 6 gezeigte Lüfterscheibe weist bei den radial innen liegenden Kühlkanälen 17 einen Winkelabstand αᵢ = 3,8° auf. Der Winkelabstand zwischen den radial äußeren Kühlkanälen 18 beträgt αₐ = 5,0°. Das Verhältnis zwischen radialer Länge I und Breite b der Kühlkanäle liegt bei c = 2.

Bei der Lüfterscheibe von Fig. 7 sind die radial äußeren Kühlkanäle gegenüber ihren jeweiligen Radialen um den Schrägungswinkel β geneigt angeordnet.

Der Aufwand zur wärmetechnischen Optimierung des Visco-Dämpfers ist vergleichsweise gering. Die vorstehend beschriebene Anordnung hat den Vorteil, dass sie das übliche Herstellverfahren der Dämpfer selbst nicht beeinflusst, sondern erst nach dessen Abschluss vorgenommen wird. Bereits produzierte und ggf. schon im Einsatz befindliche Dämpfer können mit den erfindungsgemäßen Lüfterscheiben nachgerüstet werden.

### Bezugszeichenliste

- 1: Dämpfergehäuse
- 3: Befestigungsflansch
- 4: Außenmantel
- 5: Innenmantel
- 7: Arbeitskammer
- 9: Befestigungsbohrung
- 11: Mittenöffnung
- 13: Deckel
- 15: Lüfterscheibe
- 17: innerer Kühlkanal
- 18: äußerer Kühlkanal
- 19: Blechronde
- 21: äußerer Einschnitt
- 23: innerer Einschnitt
- 25: Kanalkreis, Reihe mehrerer Kühlkanäle
- 27: äußerer Kreisring
- 29: innerer Kreisring
- 31: mittlerer Kreisring
- 33: äußere Strahlschweißnaht
- 35: innere Strahlschweißnaht
- 37: Winkelversatz

- b: Breite
- c: Verhältnis
- l: Länge
- R: Radiale
- r: Ziehradius
- Q, Qₐ, Qᵢ: Querschnittsfläche
- α, αₐ, αᵢ: Winkelabstand
- β: Schrägungswinkel

## Patentansprüche

1. Viskositäts-Drehschwingungsdämpfer
• mit einem drehsteif mit einer Maschinenwelle, insbesondere einer Motorwelle, verbindbaren ringförmigen Dämpfergehäuse (1),
• wobei das Dämpfergehäuse (1) eine Arbeitskammer (7) zur Aufnahme eines Schwungrings umschließt
• und die Arbeitskammer (7) mit einem viskosen Dämpfungsmittel gefüllt ist,
• wobei wenigstens eine der beiden Stirnflächen des Drehschwingungsdämpfers eine Lüfterscheibe (15) mit Kühlkanälen (17,18) trägt,
**dadurch gekennzeichnet, dass**
• die Kühlkanäle (17,18) auf zumindest zwei konzentrischen Teilkreisen der Lüfterscheibe (15) angeordnet sind und
• die radial inneren Kühlkanäle (17) gegenüber den radial äußeren Kühlkanälen (18) unterschiedliche geometrische Abmessungen besitzen.

2. Viskositäts-Drehschwingungsdämpfer nach Anspruch 1, **dadurch gekennzeichnet, dass** das Verhältnis cₐ zwischen radialer Länge I und Breite b der radial äußeren Kühlkanäle (18) größer ist als das Verhältnis cᵢ der radial inneren Kühlkanäle (17).

3. Viskositäts-Drehschwingungsdämpfer nach Anspruch 2, **dadurch gekennzeichnet, dass** die Verhältnisse cₐ, cᵢ zwischen 3,5 und 1 liegen.

4. Viskositäts-Drehschwingungsdämpfer nach einem der vorhergehenden Ansprüche, **dadurch gekennzeichnet, dass** die Querschnittsfläche Qₐ der radial äußeren Kühlkanäle (18) kleiner ist als die Querschnittsfläche Qᵢ der radial inneren Kühlkanäle (17).

5. Viskositäts-Drehschwingungsdämpfer nach einem der vorhergehenden Ansprüche, **dadurch gekennzeichnet, dass** die radial inneren Kühlkanäle (17) breiter sind als die radial äußeren Kühlkanäle (18).

6. Viskositäts-Drehschwingungsdämpfer nach einem der vorhergehenden Ansprüche, **dadurch gekennzeichnet, dass** der Winkelabstand αₐ zwischen benachbarten, radial außen liegenden Kühlkanälen (18) kleiner ist als der Winkelabstand αᵢ der radial innen liegenden Kühlkanäle (17).

7. Viskositäts-Drehschwingungsdämpfer nach Anspruch 6, **dadurch gekennzeichnet, dass** der Winkelabstand αₐ zwischen benachbarten äußeren Kühlkanälen (18) zwischen 3° und 7° liegt.

8. Viskositäts-Drehschwingungsdämpfer nach Anspruch 6 oder 7, **dadurch gekennzeichnet, dass** der Winkelabstand αᵢ zwischen benachbarten inneren Kühlkanälen (17) zwischen 5° und 15° liegt.

9. Viskositäts-Drehschwingungsdämpfer nach einem der vorhergehenden Ansprüche, **dadurch gekennzeichnet, dass** die radial äußeren und / oder inneren Kühlkanäle (17,18) unter einem Schrägungswinkel β ≤ 30° gegenüber ihren Radialen R ausgerichtet sind.

10. Viskositäts-Drehschwingungsdämpfer nach einem der vorhergehenden Ansprüche, **dadurch gekennzeichnet, dass** die Kühlkanäle (17,18) auf verschiedenen Radialen R liegen.

11. Viskositäts-Drehschwingungsdämpfer nach einem der vorhergehenden Ansprüche, **dadurch gekennzeichnet, dass** die inneren Kühlkanäle (17) gegenüber den äußeren Kühlkanälen (18) radial beabstandet sind.

12. Viskositäts-Drehschwingungsdämpfer nach Anspruch 11, **dadurch gekennzeichnet, dass** die radiale Beabstandung der Kühlkanäle (17,18) zwischen 20% und 100% der Länge I der Kühlkanäle beträgt.

13. Viskositäts-Drehschwingungsdämpfer nach einem der vorhergehenden Ansprüche, **dadurch gekennzeichnet, dass** die Kühlkanäle (17,18) mit radialseitig offenen Enden aus der Ebene ihrer Blechronde (19) aufgewölbt ausgebildet sind.

14. Viskositäts-Drehschwingungsdämpfer nach einem der vorhergehenden Ansprüche, **dadurch gekennzeichnet, dass** der Querschnitt der Kühlkanäle (17,18) rechteck-, sinuswellen- oder kreisbogenförmig ist.

## Claims

1. A viscous torsional vibration damper
- having a ring-shaped damper housing (1) which can be connected in a torsion-proof manner to a machine shaft, in particular an engine shaft,
- the damper housing (1) comprising an operating chamber (7) to receive an inertia ring,
- and the operating chamber (7) being filled with a viscous damping medium,
- at least one of the two front faces of the torsional vibration damper having a fan disc (15) with cooling channels (17, 18),
**characterised in that**
- the cooling channels (17, 18) are positioned on the fan disc (15) in at least two concentric part circles and
- the radially inner cooling channels (17) have different geometrical dimensions from the radially outer cooling channels (18).

2. A viscous torsional vibration damper in accordance with claim 1,
**characterised in that**
the ratio cₐ between the radial length 1 and the width b of the radially outer cooling channels (18) is greater than the ratio cᵢ of the radially inner cooling channels (17).

3. A viscous torsional vibration damper in accordance with claim 2,
**characterised in that**
the ratios cₐ and cᵢ lie between 3.5 and 1.

4. A viscous torsional vibration damper in accordance with one of the preceding claims,
**characterised in that**
the cross-sectional area Qₐ of the radially outer cooling channels (18) is less than the cross-sectional area Qᵢ of the radially inner cooling channels (17).

5. A viscous torsional vibration damper in accordance with one of the preceding claims,
**characterised in that**
the radially inner cooling channels (17) are wider than the radially outer cooling channels (18).

6. A viscous torsional vibration damper in accordance with one of the preceding claims,
**characterised in that**
the angular distance (αₐ) between neighbouring, radially outer cooling channels (18) is less than the angular distance (αᵢ) between neighbouring, radially inner cooling channels (17).

7. A viscous torsional vibration damper in accordance with claim 6,
**characterised in that**
the angular distance (αₐ) between neighbouring outer cooling channels (18) lies between 3° and 7°.

8. A viscous torsional vibration damper in accordance with claim 6 or 7,
**characterised in that**
the angular distance (αᵢ) between neighbouring inner cooling channels (17) lies between 5° and 15°.

9. A viscous torsional vibration damper in accordance with one of the preceding claims,
**characterised in that**
the radially outer and/or radially inner cooling channels (17, 18) are oriented at a helix angle of β ≤ 30° in relation to their radials R.

10. A viscous torsional vibration damper in accordance with one of the preceding claims,
**characterised i**n that
the cooling channels (17, 18) lie on different radials R.

11. A viscous torsional vibration damper in accordance with one of the preceding claims,
**characterised in that**
the inner cooling channels (17) are positioned radially at a distance from the outer cooling channels (18).

12. A viscous torsional vibration damper in accordance with claim 11, **characterised in that**
the radial distance between the cooling channels (17, 18) is between 20% and 100% of the length 1 of the cooling channels.

13. A viscous torsional vibration damper in accordance with one of the preceding claims,
**characterised in that**
the cooling channels (17, 18) are designed with radially open ends curved out of the plane of their round metal plates (19).

14. A viscous torsional vibration damper in accordance with one of the preceding claims,
**characterised in that**
the cross-section of the cooling channels (17, 18) is shaped like a rectangle, a sine wave or the arc of a circle.

## Revendications

1. Amortisseur par viscosité d'oscillations de torsion
• comprenant un corps (1) annulaire d'amortisseur, pouvant être rendu solidaire en rotation d'un arbre de machine, notamment d'un arbre de moteur,
• dans lequel le corps (1) d'amortisseur enferme une chambre (7) de travail pour la réception d'un anneau oscillant,
• et la chambre (7) de travail est empli d'un agent visqueux d'amortissement,
• dans lequel au moins l'une des deux surfaces frontales de l'amortisseur d'oscillation de torsion porte un disque (15) de ventilateur ayant des canaux (17, 18) de refroidissement,
**caractérisé en ce que**
• les canaux (17, 18) de refroidissement sont disposés sur au moins deux arcs concentriques du disque (15) du ventilateur et,
• les canaux (17) de refroidissement intérieurs radialement ont des dimensions géométriques différentes des canaux (18) de refroidissement extérieurs radialement.

2. Amortisseur par viscosité d'oscillations de torsion suivant la revendication 1, **caractérisé en ce que** le rapport Cₐ entre la longueur 1 radiale et la largeur b des canaux (18) de refroidissement extérieurs radialement est plus grand que le rapport Cᵢ des canaux (17) de refroidissement intérieurs radialement.

3. Amortisseur par viscosité d'oscillations de torsion suivant la revendication 2, **caractérisé en ce que** les rapports Cₐ. Cᵢ sont compris entre 3,5 et 1.

4. Amortisseur par viscosité d'oscillations de torsion suivant l'une des revendications précédentes, **caractérisé en ce que** la surface Qₐ de section transversale des canaux (18) de refroidissement extérieurs radialement est plus petite que la surface Qᵢ de section transversale des canaux (17) de refroidissement intérieurs radialement.

5. Amortisseur par viscosité d'oscillations de torsion suivant l'une des revendications précédentes, **caractérisé en ce que** les canaux (17) de refroidissement intérieurs radialement sont plus larges que les canaux (18) de refroidissement extérieurs radialement.

6. Amortisseur par viscosité d'oscillations de torsion suivant l'une des revendications précédentes, **caractérisé en ce que** la distance αₐ angulaire entre des canaux (18) de refroidissement voisins extérieurs radialement est plus petite que la distance αᵢ angulaire entre les canaux (17) de refroidissement intérieurs radialement.

7. Amortisseur par viscosité d'oscillations de torsion suivant la revendication 6, **caractérisé en ce que** la distance αᵢ angulaire entre des canaux (18) de refroidissement extérieurs voisins est comprise entre 3° et 7°.

8. Amortisseur par viscosité d'oscillations de torsion suivant la revendication 6 ou 7,
**caractérisé en ce que** la distance αᵢ angulaire entre les canaux (17) de refroidissement intérieurs voisins est comprise entre 5° et 15°.

9. Amortisseur par viscosité d'oscillations de torsion suivant l'une des revendications précédentes, **caractérisé en ce que** les canaux (17, 18) de refroidissement extérieurs radialement et /ou intérieurs radialement sont inclinés sous un angle β ≤ 30°par rapport à leurs rayons R.

10. Amortisseur par viscosité d'oscillations de torsion suivant l'une des revendications précédentes, **caractérisé en ce que** les canaux (17, 18) sont sur des rayons R différents.

11. Amortisseur par viscosité d'oscillations de torsion suivant l'une des revendications précédentes, **caractérisé en ce que** les canaux (17) intérieurs de refroidissement sont à distance radialement des canaux (18) extérieurs de refroidissement.

12. Amortisseur par viscosité d'oscillations de torsion suivant l'une des revendications précédentes, **caractérisé en ce que** les distances radiales entre les canaux (17, 18) de refroidissement représentent de 20% à 100% de la longueur l des canaux de refroidissement.

13. Amortisseur par viscosité d'oscillations de torsion suivant l'une des revendications précédentes, **caractérisé en ce que** les canaux (17, 18) de refroidissement sont, par leur extrémité ouverte du côté radial, cintrés hors du plan de leur flan (19) de tôle.

14. Amortisseur par viscosité d'oscillations de torsion suivant l'une des revendications précédentes, **caractérisé en ce que** la scission transversale des canaux (17, 18) de refroidissement est rectangulaire, sinusoïdale ou en arc de cercle.
